# EUROPEAN PATENT SPECIFICATION

(11) **EP 3 946 807 B1**
(45) Date of publication and mention of the grant of the patent: **18.02.2026**
(21) Application number: 20783698.2
(22) Date of filing: 02.04.2020
(51) Int. Cl.: B24B 15/08, B24B 27/00, B24B 41/04, B24B 47/10, B24B 23/08

(54) **REMOTE SURFACE TREATMENT SYSTEMS AND METHODS**
SYSTEME UND VERFAHREN ZUR ENTFERNTEN OBERFLÄCHENBEHANDLUNG
SYSTÈMES ET PROCÉDÉS DE TRAITEMENT DE SURFACE À DISTANCE

(30) Priority: 02.04.2019 US 201916372961
(43) Date of publication of application: 09.02.2022
(73) Proprietor: Ge-Hitachi Nuclear Energy Americas LLC, Wilmington, NC 28401 (US)
(72) Inventor: MATSUMOTO, Jack, T., Wilmington, NC 28402 (US); DI BARI, Nicholas, F., Wilmington, NC 28402 (US)
(74) Representative: Handsome I.P. Ltd
(86) International application number: PCT/US2020/026381
(87) International publication number: WO 2020/206117

(56) References cited:
- CN-Y- 2 827 630
- JP-A- 2005 342 821
- JP-A- H06 134 662
- JP-A- H08 197 394
- JP-A- H08 197 394
- JP-U- S58 102 042
- JP-U- S58 102 042
- US-A- 5 687 205

## Description

### BACKGROUND

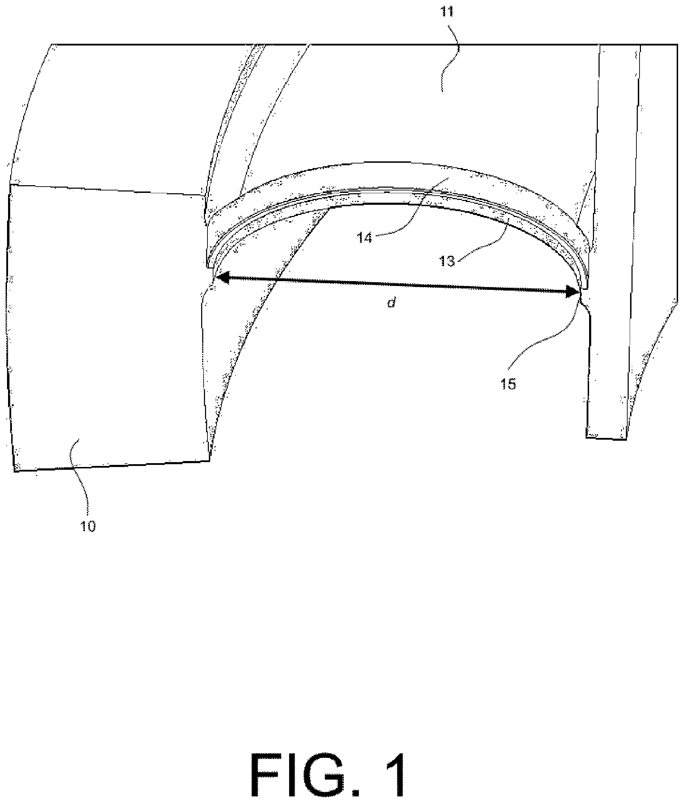

FIG. 1 is a cross-sectional view of a related art nuclear reactor 10 about a manway 11 in a shroud support, which is typically submerged deep under liquid coolant during reactor maintenance. During such maintenance, manway 11 may require repair or replacement of a cover, which may develop weld defect. As such, cutting out manway 11 and adding a bolted replacement manway cover may be executed during an outage to repair manway 11.

Cutting removes material from a bore edge, such as through electrical discharge machining, creating a precise and even hole 15 in manway 11. Because the affected area and cover may be large, hole 15 may need to be almost 61 cm (two feet) in diameter d. Hole 15 may also be 2.5 - 7.6 cm (1-3 inches) deep, given the thickness of manway 11. The inner surface of hole 15 may thus be relatively large and may include a ledge or other variations to accommodate a repair or cover. For example, the inner surface of hole 15 may include bore 13 and spotface surface 14.

Some background information may be found in JP2005342821A, JPS58102042U, and JPHO8197394A.

From JP 2005 342821 A there is known a system for polishing a remote surface comprising a bridge shaped to secure about the surface, a spindle coupled to the bridge and rotatable about a first axis and a polishing assembly secured to the spindle, wherein the polishing assembly includes a polishing surface rotatable about a second axis.

### SUMMARY

Embodiments are provided in accordance with the appended claims. Example embodiments include assembly systems for remotely treating surfaces with desired polishing and/or compression. Example embodiment systems include bridges to secure about the surface for treating. A rotatable spindle may extend downward from and be drivable from the bridge and include a polisher that moves, such as by spinning, in contact with the surface to be treated. The polisher further includes a biasing element that pushes it against the surface to impart compressive stresses, potentially up to hundreds of Newtons (several dozens pounds) of force. The polisher may include a round filament brush. The spindle can rotate about another axis to move the polisher around a partial or entire perimeter of the surface to be treated. All of example embodiment systems may be remotely operated, and the various motions and biasing may be provided, simultaneously, by one or more drives in the bridge or polisher. The polisher may further be moveable vertically by such drives. For example, a pneumatic slide, hydraulic motor, and/or stepper motor may be used to remotely provide biasing and various rotations, respectively. Example embodiments are useable with spotfaces deep in nuclear reactors to remove a recast layer that may be formed following electrical discharge machining of the spotface and through bore, where manual or direct operator interface is not possible.

### BRIEF DESCRIPTIONS OF THE DRAWINGS

Example embodiments will become more apparent by describing, in detail, the attached drawings, wherein like elements are represented by like reference numerals, which are given by way of illustration only and thus do not limit the terms which they depict.
FIG. 1 is an illustration of a related art manway in a nuclear reactor.
FIG. 2 is an illustration of an example embodiment bridge assembly.
FIG. 3 is an illustration of an example embodiment polishing assembly.
FIG. 4A is a cross-sectional schematic of an example embodiment bore polisher with a polishing assembly oriented vertically and mated with a bore polishing wheel. FIG. 4B is a cross-sectional schematic of the example embodiment bore polisher with the polishing wheel withdrawn lower vertically. FIG. 4C is a cross-sectional schematic of the example embodiment bore polisher with the polishing assembly disconnected from the bore polisher and rotated about several axes.

### DETAILED DESCRIPTION

Because this is a patent document, general, broad rules of construction should be applied when reading it. Everything described and shown in this document is an example of subject matter falling within the scope of the claims, appended below. Any specific structural and functional details disclosed herein are merely for purposes of describing how to make and use examples. Several different embodiments and methods not specifically disclosed herein may fall within the claim scope; as such, the claims may be embodied in many alternate forms and should not be construed as limited to only examples set forth herein.

The structures and operations discussed below may occur out of the order described and/or noted in the figures. For example, two operations and/or figures shown in succession may in fact be executed concurrently or may sometimes be executed in the reverse order, depending upon the functionality/acts involved. Similarly, individual operations within example methods described below may be executed repetitively, individually or sequentially, to provide looping or other series of operations aside from single operations described below. It should be presumed that any embodiment or method having features and functionality described below, in any workable combination, falls within the scope of example embodiments.

As used herein, "axial" and "vertical" directions are the same up or down directions oriented along the major axis of a nuclear reactor, often in a direction oriented with gravity. "Transverse" and "horizontal" directions are perpendicular to the "axial" and are side-to-side directions oriented in a single plane at a particular axial height.

The Inventors have recognized that electrical discharge machining, as well as other material removal work, may leave a recast layer or a cold worked layer in the material being machined. This layer presents undesirable traits for interfacing with a cover or other repair, including material roughness and weakness. For machining in remote areas and/or underwater, such as in deep nuclear reactor repairs, it is infeasible to remove this layer with direct or hand tooling. The Inventors have further recognized that shot peening and/or laser treatment remotely may insufficiently remove the recast layer and not impart compression to strengthen and even the material. Lasers and shot peening may also be difficult to achieve in deep remote locations, especially in timely combination. Example embodiments described below uniquely enable solutions to these and other problems discovered by the Inventors.

The present invention is systems for remotely treating surfaces and methods of using the same in nuclear reactor spotfaces. In contrast to the present invention, the few example embodiments and example methods discussed below illustrate just a subset of the variety of different configurations that can be used as and/or in connection with the present invention.

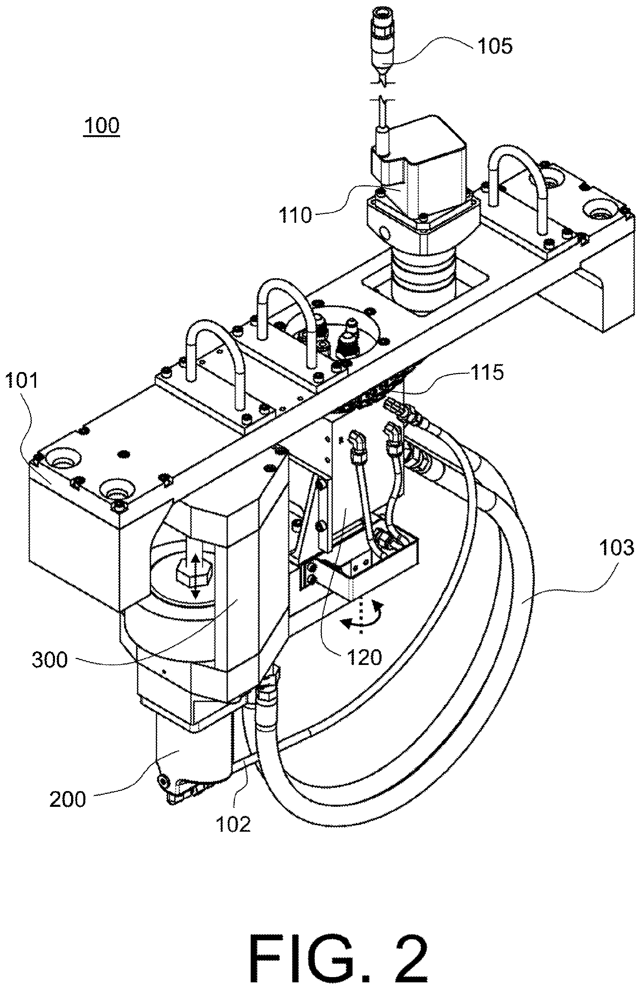

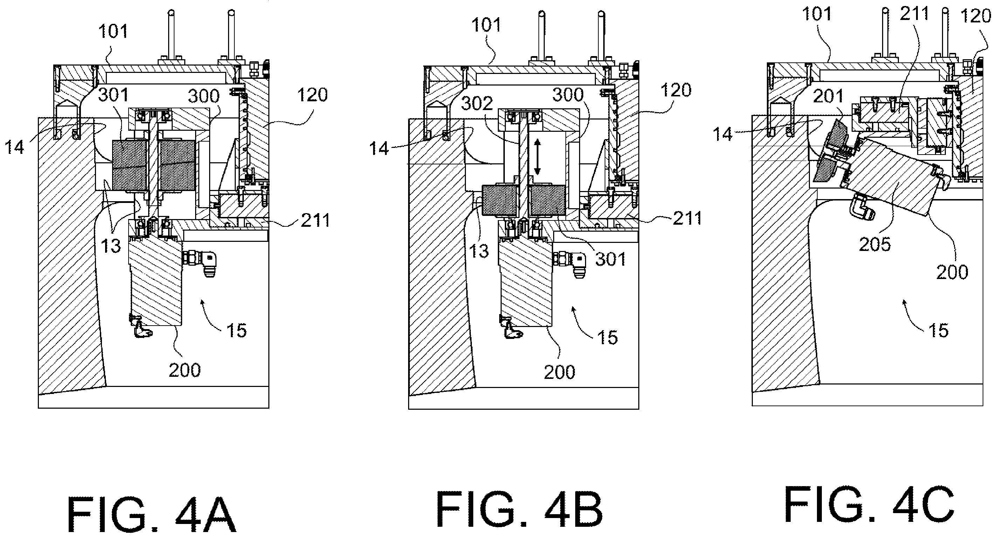

FIG. 2 is an illustration of an example embodiment bridge assembly 100 configured to remotely position grinding and/or smoothing elements over a work surface. Although surfaces described in connection with example embodiments include bores and spotfaces deep underwater in reactors, it is understood that example embodiments are useable in connection with any type of surface requiring remote treatment, including pipe interiors, holding tanks or pools, access-restricted areas, etc. As shown in FIG. 2, bridge assembly 100 includes bridge 101 that may have a "U" shape with body and legs that allow positioning over, or separated from, a surface. Legs of bridge 101 may secure to or seat against a component having a surface, such as a spotface, to be treated. Anchoring (as shown in FIGS. 4A-C) may further be used as a securing device between legs of bridge 101 and the component. Bridge 101 may have other shapes and configurations that allow it to better fit to and/or access a surface to be worked.

Example embodiment bridge assembly 100 includes one or more drives to power various components, such as spindle 120 rotatable about a working surface. For example, bridge assembly 100 may include stepper motor 110 that rotates spindle 120 about bridge 101. Stepper motor 110 may connect to spindle assembly 120 via transmission 115, which may be a chain that meshes with a gear on spindle 120 in any desired ratio, such as a 2:1 ratio of rotation between stepper motor 110 and spindle 120. Similarly, a direct drive or any other type of powering may be used to rotate spindle assembly about a work surface. Spindle 120 may be rotationally seated in a middle of bridge 101 to permit full rotation of spindle 120 about a central vertical axis of bridge 101.

Motor 110, as well as other drives and devices in example embodiments, may be connected to controls, operators, data, and/or power through an umbilical connection 105. Alternatively, local power sources and wireless communications can be used to power and control example embodiments. Spindle 120 may connect to and power and/or control polishing assembly 200 and/or bore polisher 300 through connections 102 and 105. For example, connection 103 may carry a pneumatic line, electrical line, and/or data connection to power bore polisher 300, and connection 102 may carry hydraulic power, electricity, data, etc. to polishing assembly 200. Through all these connections and power arrangements, example embodiment bridge assembly 100 may be positioned in remote areas, such as far into pipes or deep in flooded reactors, and operate with desired characteristics.

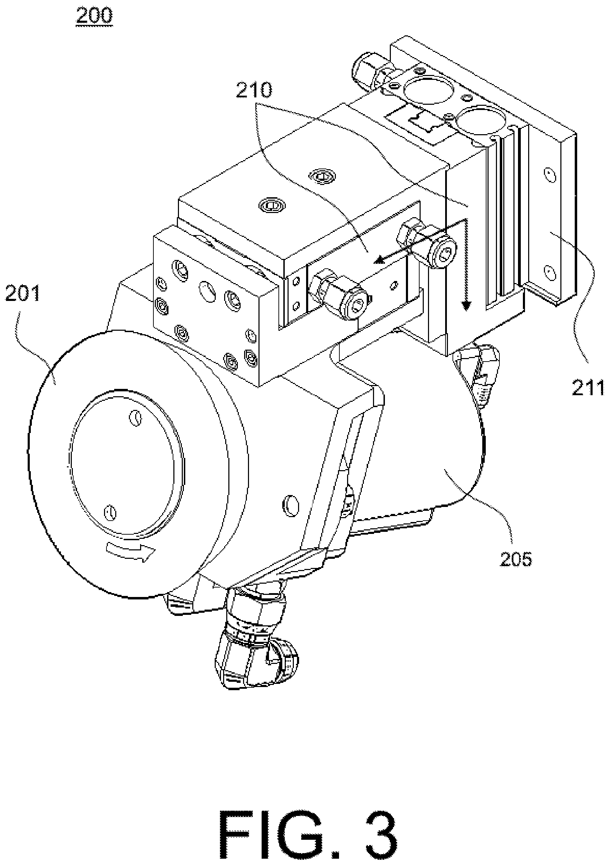

Spindle 120 connects to desired toolings to work on surfaces under bridge assembly 100. For example, as shown in FIG. 2, polishing assembly 200 may be connected to and rotated by spindle 120. As shown in FIG. 3, polishing assembly 200 may include a polishing mount 211 that joins to spindle assembly 120 and connects a rotatable polishing surface 201, pneumatic slides 210 and hydraulic motor 205 to spindle 120 to carry the same. Polishing surface 201 is rotatable about a transverse or angled axis to polish and remove electrical discharge machining recast from surfaces it impinges. Pneumatic slides 210 may move motor 205 and polishing surface 201 in horizontal and vertical directions as shown in FIG. 3, to reach all surfaces in spotface 15, for example. Pneumatic slides 210 may supply a large amount of force directed along the internal rotation axis of polishing surface 201. For example, pneumatic slides 210 may expand between polishing mount 211 and polishing surface 201 for up to about 53.4 Newtons (12 lbs.) of force per 1.3 cm (½-inch) of width of the polishing surface. These higher levels of force, such as about 267 - 312 Newtons (60-70 lbs.) of force on a round polishing surface 201 of 12.7 - 15.3 cm (5-6 inches), polish a larger recast layer and are sufficient to both remove the recast material and impart compressive stresses in most metallic surfaces. In a reactor shroud support, for example, this may be sufficient surface layer removal and compression to give a good working surface that it not subject to further degradation in the reactor.

Polishing surface 201 may be round, up to about 14 cm (5.5 inches) in diameter, for example, and driven angularly by hydraulic motor 205, which may have a separate or local power supply. Hydraulic motor 205 may be a positive displacement motor that can maintain a constant speed in polishing surface 201 even under heavier polishing pressures. For example, polishing surface 201 maybe driven at about 50 ft/s or more, or about 2000rpm. Polishing surface 201 may use any abrasive of polishing material to achieve a desired surface finish, including, for example, an approximate 80 grit silicon carbide filament surface with about 30-40% grit load by weight. Polishing assembly 200 may position polishing surface 201 at approximately 10 degrees to spotface surface 14 (FIG. 1).

FIGS. 4A-C are illustrations of example embodiment polishing assembly 200 carried by example embodiment bridge assembly 100 in various configurations for polishing surfaces 13 and 14 of spotface 15, in an example method of preparing a nuclear reactor spotface for repair during a maintenance period. As shown in FIGS. 4A-C, bridge 101 may be mounted on a surface about spotface 15, which may be formed by electrical discharge machining. Polishing assembly 200 extends down into spotface 15 from spindle assembly 120 to contact surfaces 13 and 14 against polishing surface 201.

Polishing surface 201 may be rotated about its internal axis by hydraulic motor 205 or another drive in assemblies 100 and/or 200 with desired pressure and movement of the same. For example, spindle 120 may be rotated about its central axis by stepper motor 110 to, in turn, orbit or revolve polishing assembly 200 across a perimeter of spotface 15. In this way, polishing surface 201 may move along a continuous and entire spotface surface 14 and bore surface 13, removing a recast layer and compressing the same. Simultaneously, pneumatic slide 210 may expand to push polishing surface 201 from polishing support 211, providing desired polishing force or pressure.

In FIG. 4A, polishing assembly 200 is oriented vertically and mated with bore polishing wheel 301 in bore polisher 300. Pneumatic slides 210 (FIG. 3) may push assembly 200 in the vertical direction along axis 302 (FIG. 4B). In this position, polishing wheel 301 may polish bore surfaces 13 and 14 when wheel 301 is rotated about axis 302. In FIG. 4B, polishing wheel 301 is withdrawn lower vertically by pneumatic slides 201 along axis 302 to polish vertical sides of surface 13. In FIG. 4C, polishing assembly 200 is disconnected from bore polisher 300 and rotated about several axes to be brought into contact with spotface surface 14.

Hydraulic motor 205 and stepper motor 110 are of sufficient force to continue driving polishing surface 201, which may be rotating at thousands of rotations per minute, at these positions and pressures without being torqued out of position. All drives, including, for example, hydraulic motor 205, stepper motor 110, pneumatic slides 210, etc. may be locally or remotely powered through appropriate connections, and can further be controlled through, and relay data through, umbilical connection 105 (FIG. 2). The continuous surface-to-surface polishing achieved by rotation of polishing surface 201, pressure from pneumatic slide 210, and feed across surfaces 13 and 14 from rotation of spindle 120 can be achieved through combined operation of these components, removing all recast layer and supplying desired compression forces evenly throughout.

Example embodiment assemblies 100 and 200 may be fabricated of materials that are compatible with an operating nuclear reactor environment, including materials that maintain their physical characteristics when exposed to high-temperature fluids and radiation. For example, metals such as stainless steels and iron alloys, nickel alloys, zirconium alloys, etc. are useable in assembly components. Similarly, direct connections between distinct parts and all other direct contact points may be lubricated and fabricated of alternating or otherwise compatible materials to prevent seizing, fouling, or metal-on-metal reactions.

Example embodiments and methods thus being described, it will be appreciated by one skilled in the art that example embodiments may be varied and substituted through routine experimentation while still falling within the scope of the following claims. For example, any number of different surfaces can be polished by example embodiment assemblies, simply through proper dimensioning and positioning. Such variations are not to be regarded as departure from the scope of these claims.

## Claims

1. A system (100) for polishing a remote surface (14), comprising:
a bridge (101) shaped to secure about the surface (14);
a spindle (120) coupled to the bridge (101) and rotatable about a first axis ; and
a polishing assembly (200) secured under the bridge (101) to the spindle (120), wherein the polishing assembly (200) includes a polishing surface (201) rotatable about a second axis (302) and pneumatic slide (210) configured to expand to force the polishing surface (201) against the remote surface (14) along the second axis (302).

2. The system (100) of claim 1, wherein the pneumatic slide (210) is configured to apply at least 21 Newtons of force per Centimeter (12 pounds of force per inch) of width of the polishing surface (201) along the second axis (302), wherein the second axis (302) is an internal axis of rotation of the polishing surface (201).

3. The system (100) of claim 1, wherein the polishing assembly (200) further includes a hydraulic motor (205) configured to rotate the polishing surface (201) about the second axis at about 2000 rotations per minute.

4. The system (100) of claim 1, wherein the bridge (101) includes a stepper motor (110) connected to the spindle (120) and configured to rotate the spindle (120) about the first axis relative to the bridge (101).

5. The system (100) of claim 4, wherein the bridge (101) is U-shaped, and wherein the spindle (120) is seated within a middle of the bridge (101) , and wherein the polishing assembly (200) extends along the second axis (302) from the spindle (120) so as to reach the surface (14) for polishing below the bridge (101).

6. The system (100) of claim 1, wherein the polishing surface (201) is rotatable to approximately 10 degrees from the horizontal, is about 80 grit silicon carbide, and is rotatable about the second axis 360 degrees below the bridge (101).

7. A method of preparing a spotface surface (14) in a nuclear facility, the method comprising:
securing a bridge assembly (100) about the spotface surface (14);
moving, with a polishing assembly (200) secured under the bridge assembly (100) remote from an operator, a polishing surface (201) across a surface (14) of the spotface in a plane containing the polishing surface (201); and
biasing, by expanding a pneumatic slide (210) in the polishing assembly (200) remote from the operator, the polishing surface (201) against the surface (14) of the spotface.

8. The method of claim 7, wherein the moving and the biasing are performed entirely underwater, and wherein the operators are entirely outside of the water.

9. The method of claim 7, wherein the biasing biases the polishing surface (201) at about 21 Newtons of force per Centimeter (12 pounds of force per inch) width of the polishing surface (201).

10. The method of claim 7, further comprising:
rotating, with the bridge (101) and spindle (120) remote from the operator, the polishing surface (201) about a vertical axis so as to polish an entire perimeter of the surface (14) of the spotface, wherein the polishing surface (201) is about 80 grit silicon carbide, and wherein the moving and biasing remove an electrical discharge machining recast layer from the spotface and impart compressive stresses in the surface (14).

## Patentansprüche

1. Ein System (100) zum Polieren einer entfernten Oberfläche (14), umfassend:
eine Brücke (101), die geformt ist, um an der Oberfläche (14) befestigt zu werden;
eine Spindel (120), die mit der Brücke (101) gekoppelt und um eine erste Achse drehbar ist; und
eine Polieranordnung (200), die unter der Brücke (101) an der Spindel (120) befestigt ist, wobei die Polieranordnung (200) eine Polierfläche (201), die um eine zweite Achse (302) drehbar ist, und einen pneumatischen Schieber (210) enthält, der konfiguriert ist, um auszufahren, um die Polierfläche (201) entlang der zweiten Achse (302) gegen die entfernte Oberfläche (14) zu drücken.

2. Das System (100) nach Anspruch 1, wobei der pneumatische Schieber (210) konfiguriert ist, um mindestens 21 Newton Kraft pro Zentimeter (12 Pfund Kraft pro Zoll) Breite der Polierfläche (201) entlang der zweiten Achse (302) aufzubringen, wobei die zweite Achse (302) eine innere Rotationsachse der Polierfläche (201) ist.

3. Das System (100) nach Anspruch 1, wobei die Polieranordnung (200) ferner einen Hydraulikmotor (205) enthält, der konfiguriert ist, um die Polierfläche (201) um die zweite Achse mit etwa 2000 Umdrehungen pro Minute zu drehen.

4. Das System (100) nach Anspruch 1, wobei die Brücke (101) einen Schrittmotor (110) enthält, der mit der Spindel (120) verbunden und konfiguriert ist, um die Spindel (120) um die erste Achse relativ zur Brücke (101) zu drehen.

5. Das System (100) nach Anspruch 4, wobei die Brücke (101) U-förmig ist, und wobei die Spindel (120) in einer Mitte der Brücke (101) sitzt, und wobei sich die Polieranordnung (200) entlang der zweiten Achse (302) von der Spindel (120) aus erstreckt, um die Oberfläche (14) zum Polieren unterhalb der Brücke (101) zu erreichen.

6. Das System (100) nach Anspruch 1, wobei die Polierfläche (201) um etwa 10 Grad aus der Horizontalen drehbar ist, aus etwa 80er-Körnung Siliziumkarbid besteht und unterhalb der Brücke (101) um 360 Grad um die zweite Achse drehbar ist.

7. Ein Verfahren zur Bearbeitung einer Plansenkfläche (14) in einer kerntechnischen Anlage, wobei das Verfahren umfasst:
Befestigen einer Brückenanordnung (100) an der Plansenkfläche (14);
bedienerfernes Bewegen einer Polierfläche (201) mittels einer unter der Brückenanordnung (100) befestigten Polieranordnung (200) über eine Oberfläche (14) der Plansenkfläche in einer die Polierfläche (201) enthaltenden Ebene; und
bedienerfernes Andrücken der Polierfläche (201) gegen die Oberfläche (14) der Plansenkfläche durch Ausfahren eines pneumatischen Schiebers (210) in der Polieranordnung (200).

8. Das Verfahren nach Anspruch 7, wobei das Bewegen und das Andrücken vollständig unter Wasser durchgeführt werden, und wobei sich die Bediener vollständig außerhalb des Wassers befinden.

9. Das Verfahren nach Anspruch 7, wobei das Andrücken die Polierfläche (201) mit etwa 21 Newton Kraft pro Zentimeter (12 Pfund Kraft pro Zoll) Breite der Polierfläche (201) beaufschlagt.

10. Das Verfahren nach Anspruch 7, ferner umfassend:
bedienerfernes Drehen der Polierfläche (201) mit der Brücke (101) und der Spindel (120) um eine vertikale Achse, um einen gesamten Umfang der Oberfläche (14) der Plansenkfläche zu polieren, wobei die Polierfläche (201) aus etwa 80er-Körnung Siliziumkarbid besteht, und wobei das Bewegen und Andrücken eine durch elektrische Entladung entstandene Umformschicht von der Plansenkfläche entfernt und Druckspannungen in die Oberfläche (14) einbringt.

## Revendications

1. - Système (100) de polissage d'une surface distante (14), comprenant :
un pont (101) formé pour se fixer autour de la surface (14) ;
une broche (120) couplée au pont (101) et apte à tourner autour d'un premier axe ; et
un ensemble de polissage (200) fixé sous le pont (101) à la broche (120), l'ensemble de polissage (200) comprenant une surface de polissage (201) apte à tourner autour d'un second axe (302) et une glissière pneumatique (210) configurée pour s'étendre afin de forcer la surface de polissage (201) contre la surface distante (14) le long du second axe (302).

2. - Système (100) selon la revendication 1, dans lequel la glissière pneumatique (210) est configurée pour appliquer au moins 21 Newtons de force par centimètre (12 livres de force par pouce) de largeur de la surface de polissage (201) le long du second axe (302), le second axe (302) étant un axe de rotation interne de la surface de polissage (201).

3. - Système (100) selon la revendication 1, dans lequel l'ensemble de polissage (200) comprend en outre un moteur hydraulique (205) configuré pour faire tourner la surface de polissage (201) autour du second axe à environ 2000 rotations par minute.

4. - Système (100) selon la revendication 1, dans lequel le pont (101) comprend un moteur pas à pas (110) relié à la broche (120) et configuré pour faire tourner la broche (120) autour du premier axe par rapport au pont (101) .

5. - Système (100) selon la revendication 4, dans lequel le pont (101) est en forme de U, et dans lequel la broche (120) est en appui à l'intérieur d'un milieu du pont (101), et dans lequel l'ensemble de polissage (200) s'étend le long du second axe (302) à partir de la broche (120) de manière à atteindre la surface (14) pour un polissage au-dessous du pont (101).

6. - Système (100) selon la revendication 1, dans lequel la surface de polissage (201) est apte à tourner à approximativement 10 degrés par rapport à l'horizontale, est en carbure de silicium d'environ 80 grains, et est apte à tourner autour du second axe à 360 degrés au-dessous du pont (101) .

7. - Procédé de préparation d'une surface de lamage (14) dans une installation nucléaire, le procédé comprenant :
fixer un ensemble pont (100) autour de la surface de lamage (14) ;
déplacer, avec un ensemble de polissage (200) fixé au-dessous de l'ensemble pont (100) à distance d'un opérateur, une surface de polissage (201) à travers une surface (14) du lamage dans un plan contenant la surface de polissage (201) ; et
solliciter, par expansion d'une glissière pneumatique (201) dans l'ensemble de polissage (200) à distance de l'opérateur, la surface de polissage (201) contre la surface (14) du lamage.

8. - Procédé selon la revendication 7, dans lequel le déplacement et la sollicitation sont effectués entièrement sous l'eau, et dans lequel les opérateurs sont entièrement hors de l'eau.

9. - Procédé selon la revendication 7, dans lequel la sollicitation sollicite la surface de polissage (201) à environ 21 Newtons de force par centimètre (12 livres de force par pouce) de largeur de la surface de polissage (201) .

10. - Procédé selon la revendication 7, comprenant en outre :
faire tourner, avec le pont (101) et la broche (120) à distance de l'opérateur, la surface de polissage (201) autour d'un axe vertical de manière à polir un périmètre entier de la surface (14) du lamage, la surface de polissage (201) étant en carbure de silicium d'environ 80 grains, et le déplacement et la sollicitation enlevant une couche de refonte d'usinage par décharge électrique à partir du lamage et conférant des contraintes de compression dans la surface (14).
